# EUROPÄISCHE PATENTANMELDUNG

(11) **EP 4 331 851 A1**
(43) Veröffentlichungstag der Anmeldung: **06.03.2024**
(21) Anmeldenummer: 23194318.4
(22) Anmeldetag: 30.08.2023
(51) Int. Cl.: B41J 13/12, B41J 11/00, G06T 7/00, B42D 25/40, B41M 3/14

(54) **STEUERVERFAHREN UND SYSTEM ZUM FLÄCHENSELEKTIVEN BESCHICHTEN EINES INDIVIDUELLEN PHYSISCHEN DOKUMENTS MIT EINER FLÜSSIGBESCHICHTUNG**

(30) Priorität: 05.09.2022 DE 102022209198
(71) Anmelder: MÜHLBAUER GMBH & CO. KG, 93426 Roding (DE)
(72) Erfinder: HEIDNER, René, 08525 Plauen (DE); DIMPFL, Martin, 93462 Lam (DE)
(74) Vertreter: Platzöder, Michael Christian

(57) **Zusammenfassung**

Verfahren zum flächenselektiven Beschichten einer Oberfläche eines individuellen physischen Dokuments, insbesondere kartenartigen Dokuments, mit einer Flüssigbeschichtung. Das Verfahren weist auf: Empfangen oder bildsensorisches Erzeugen einer Ist-Bildinformation, die ein Ist-Bild der Oberfläche repräsentiert; Abgleichen der Ist-Bildinformation mit einer Referenz-Bildinformation, die ein Referenz-Bild einer zu der Oberfläche korrespondierenden Referenz-Oberfläche repräsentiert, um anhand von etwaigen Abweichungen zwischen dem Ist-Bild und dem Referenz-Bild eine etwaige Deformation der Oberfläche gegenüber der Referenz-Oberfläche zu ermitteln und eine diese Deformation oder alternativ deren Abwesenheit, repräsentierende Deformationsinformation zu erzeugen; in Abhängigkeit von der Deformationsinformation und von einer Geometrieinformation, die eine Soll-Gestalt einer mit der Flüssigbeschichtung zu versehenden Teilfläche der Oberfläche definiert, Ermitteln einer Beschichtungsinformation, die eine Ist-Gestalt einer mittels flächenselektiver Flüssigbeschichtung der Oberfläche zu beschichtenden Teilfläche der Oberfläche definiert; und Ansteuern einer Beschichtungseinrichtung, um diese zu veranlassen, die Oberfläche des Dokuments gemäß der Beschichtungsinformation flächenselektiv in der definierten Teilfläche mit der Flüssigkeitsbeschichtung zu versehen. Offenbart wird auch ein Flüssigbeschichtungssystem und ein Computerprogramm zur Ausführung des Verfahrens.

## Beschreibung

Die vorliegende Erfindung liegt auf dem Gebiet der Flüssigbeschichtungstechnologie, und betrifft ein Verfahren zum Ansteuern (Steuerverfahren) einer Beschichtungseinrichtung und ein System, jeweils zum flächenselektiven Beschichten einer bestimmten Teilfläche einer, insbesondere weitgehend ebenen, Oberfläche eines bestimmten individuellen physischen Dokuments mit einer Flüssigbeschichtung. Die Erfindung betrifft zudem ein zur Ausführung des Verfahrens konfiguriertes Computerprogramm oder Computerprogrammprodukt.

Aus dem Stand der Technik ist eine Vielzahl verschiedener Typen von individuell individualisierten, insbesondere personalisierten, Dokumenten, etwa in Kartenform oder Buchform bekannt. So gehören beispielsweise buchartige Passdokumente oder einzelne Seiten davon (z.B. die sog. "Pass-Inhaberseite" oder Papierseiten), Ausweiskarten und viele Arten von personalisierten Chipkarten, etwa Bankkarten, Kreditkarten, Ausweiskarten, Mitgliedskarten, Zugangsberechtigungskarten usw. oder personenbezogene (meist kartenförmige) Etiketten jeweils zur Gruppe der oft individualisierten Dokumente.

Zudem sind Flüssigbeschichtungsverfahren bekannt, die in der Fachsprache oftmals mit dem englischen Begriff "Liquid Coating" oder als "Flüssiglackierung" bezeichnet werden. Diese Beschichtungen werden in flüssigem Zustand schichtförmig aufgetragen, trocknen aber von allein oder unter gezielter Einwirkung, wie etwa Bestrahlung, zu einer festen Oberfläche aus und sind daher im Vergleich zu anderen Beschichtungen besonders einfach und kostengünstig aufzutragen, da die zu beschichtenden Teile weder erhitzt werden müssen oder andere energieintensive Verfahrensschritte erforderlich sind. Flüssiglacke bestehen aus einem flüssigen Träger und festen Bestandteilen, die nach dem Trocknen des Lacks übrigbleiben. Zu den festen Bestandteilen von Flüssiglacken gehören meist Harze, die nach dem Trocknen für die robuste Beschichtung sorgen, Pigmente, die die Farbe liefern, und Zusatzstoffe, die neue Eigenschaften verleihen, z. B. die Trocknungsgeschwindigkeit der Beschichtung regulieren, den UV-Schutz erhöhen oder Korrosion hemmen.

Ein Anwendungsfall von Flüssigbeschichtungen betrifft das selektive Aufbringen einer solchen Beschichtung auf eine Dokumentenoberfläche, sodass diese nicht komplett, sondern nur flächenselektiv, d.h. stellenweise an einer bestimmten Teilfläche der Dokumentenoberfläche, beschichtet wird, während zumindest eine anderer Oberflächenbereich der Dokumentenoberfläche nicht mit der Beschichtung versehen wird.

Unter dem Begriff "Teilfläche", wie hierin verwendet, ist dabei eine echte Untermenge der Menge aller Punkte einer bestimmten Dokumentenoberfläche zu verstehen. Eine Teilfläche kann dabei auch mehrere disjunkte, insbesondere nichtzusammenhängende, Flächenabschnitte aufweisen.

Als zu beschichtende individuelle physische Dokumente für ein derartiges flächenselektives Beschichten können insbesondere Dokumente der vorgenannten Art verwendet werden. "Individuell" bedeutet in diesem Zusammenhang, dass das Dokument vor dem flächenselektiven Beschichten entweder kontrolliert individualisiert wird oder wurde, etwa durch Personalisierung, oder dass es im Rahmen seines Produktions-, Verarbeitungs- oder Lagerungsprozesses prozessbedingt zumindest teilweise unkontrolliert individuelle Eigenschaften erlangt, die es von anderen auf gleiche Weise prozessierten Dokumenten unterscheiden können. Letzteres kann insbesondere vorkommen, wenn sich ein solches Dokument vor seiner Beschichtung gegenüber seiner ursprünglichen Form prozessbedingt oder durch andere äußere Einflüsse wie etwa Temperaturänderungen deformiert, meist auf nicht exakt vorhersagbare Weise. Im Hinblick auf die vorgenannten kartenförmigen Dokumente kann dies insbesondere der Fall sein, wenn diese Dokumente als Laminat ausgebildet sind bzw. werden und sich ihre Form als Folge des Laminierens verändern kann (Deformation), bevor eine flächenselektive Flüssigbeschichtung aufgebracht wird. So kann es sein, dass eine bei einer Aufsicht auf das Dokument wahrnehmbare Gestalt der tatsächlich erzeugten Beschichtung aufgrund der Deformation des Dokuments von ihrer vorgesehenen Soll-Gestalt abweicht.

Es ist eine Aufgabe der Erfindung, die bei einer Flüssigkeitsbeschichtung von Dokumenten, insbesondere von ein Laminat aufweisenden Dokumenten, erreichbare Qualität, insbesondere hinsichtlich des Erscheinungsbild solcher Dokumente, weiter zu verbessern.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der hier vorgestellten Lösung betrifft ein, insbesondere computerimplementiertes, Verfahren zum flächenselektiven Beschichten einer Oberfläche eines individuellen physischen Dokuments, insbesondere kartenartigen Dokuments, mit einer Flüssigbeschichtung. Die Oberfläche kann insbesondere ein begrenzter Oberflächenabschnitt auf der Oberfläche, insbesondere des Dokuments, insbesondere eine Hauptseite des Dokuments oder ein Flächenabschnitt einer solchen Hauptseite sein. Die Oberfläche kann insbesondere (abgesehen von einer Rauheit im Sinne einer Gestaltabweichung dritter bis fünfter Ordnung bei technischen Oberflächen, insbesondere nach der deutschen Industrienorm DIN 4760) zumindest näherungsweise eben sein. Das Verfahren weist auf:
(i) Empfangen oder bildsensorisches Erzeugen einer Ist-Bildinformation, die ein Ist-Bild der Oberfläche repräsentiert;
(ii) Abgleichen der Ist-Bildinformation mit einer Referenz-Bildinformation, die ein Referenz-Bild einer zu der Oberfläche korrespondierenden Referenz-Oberfläche repräsentiert, um anhand von etwaigen Abweichungen zwischen dem Ist-Bild und dem Referenz-Bild eine etwaige Deformation der Oberfläche gegenüber der Referenz-Oberfläche zu ermitteln und eine diese Deformation oder alternativ deren Abwesenheit, repräsentierende Deformationsinformation zu erzeugen;
(iii) in Abhängigkeit von der Deformationsinformation und von einer Geometrieinformation (insbesondere von einem Referenz-Layout), die eine Soll-Gestalt einer mit der Flüssigbeschichtung zu versehenden Teilfläche der Oberfläche definiert, Ermitteln einer Beschichtungsinformation (insbesondere eines Beschichtungslayouts), die eine Ist-Gestalt einer mittels flächenselektiver Flüssigbeschichtung der Oberfläche zu beschichtenden Teilfläche der Oberfläche definiert; und
(iv) Ansteuern einer Beschichtungseinrichtung, um diese zu veranlassen, die Oberfläche des Dokuments gemäß der Beschichtungsinformation flächenselektiv in der definierten Teilfläche mit der Flüssigkeitsbeschichtung zu versehen.

Dabei wird beim Ermitteln der Beschichtungsinformation die Ist-Gestalt der Teilfläche aus der Geometrieinformation anhand einer in Abhängigkeit von der Deformationsinformation definierten Verzerrung der Soll-Gestalt derart ermittelt, dass nach der Ausführung der Flüssigkeitsbeschichtung das Zusammenwirken der Ist-Gestalt der beschichteten Teilfläche mit der Form der Oberfläche im Bereich der Teilfläche die Verzerrung zumindest teilweise kompensiert.

Unter dem Begriff "Information", wie hierin insbesondere in den zusammengesetzten Begriffen "Ist-Bildinformation" und "Referenz-Bildinformation", "Deformationsinformation", "Geometrieinformation", "Beschichtungsinformation" usw. verwendet, ist insbesondere eine in beliebiger Weise maschinenlesbar verfügbare Information mit den jeweils dazu definierten Eigenschaften (z.B. Bildinformation, die ein Ist-Bild der Oberfläche repräsentiert) zu verstehen. Die jeweilige Information kann insbesondere in Form von (insbesondere digitalen) Daten, etwa als auf oder in einem Speichermedium gespeicherte digitale Daten (z.B. Datei) oder als ein Datenstrom implementiert sein bzw. werden.

Unter dem Begriff "Gestalt", wie in "Ist-Gestalt" und "Soll-Gestalt", wie hierin verwendet, ist insbesondere eine Angabe zu verstehen, die zumindest einen Aspekt einer Form einer jeweiligen (Teil-)Fläche, insbesondere die Form von deren Kontur bzw. Umfang, definiert. Insbesondere kann die Gestalt eine geometrische Form und/oder eine Größe der (Teil-)Fläche definieren.

Unter dem Begriff "individuelles physisches Dokument ", wie hierin verwendet, ist ein materielles, d.h. (im Gegensatz zu einem digitalen Dokument, das nur durch Daten definiert ist) massebehaftetes, und somit "physisches" Dokument zu verstehen, das in dem Sinne individuell ist, dass es sich selbst von gleichartigen Dokumenten, beispielsweise im Falle von kartenartigen Dokumenten von anderen derartigen Dokumenten gleicher Machart, mit menschlichen Sinnen erkennbar unterscheidet.

Wie schon vorausgehend angemerkt bedeutet "individuell" in diesem Zusammenhang, dass das Dokument entweder kontrolliert individualisiert wird oder wurde, etwa durch Personalisierung, oder dass es im Rahmen seines Produktions-, Verarbeitungs- oder Lagerprozesses prozessbedingt zumindest teilweise unkontrolliert individuelle Eigenschaften erlangt, die es von anderen auf gleiche Weise prozessierten Dokumenten unterscheiden können. Eine solche, insbesondere unkontrollierte, Individualisierung kann dabei insbesondere durch Fertigungstoleranzen oder nachfolgenden Veränderungen, insbesondere unter äußeren Einflüssen, bedingt sein. Die vorgenannten Verformungen von an sich gleichartigen Dokumenten infolge eines die Dokumente im Rahmen von Fertigungstoleranzen individuell verformenden Laminationsprozesses sind ein Beispiel dafür. Insbesondere kann das Dokument ein Sicherheitsdokument, wie etwa ein Ausweisdokument, eine Bank- oder Kreditkarte oder ähnliches sein. Es kann insbesondere eine sogenannte Smartcard mit integrierter Elektronik wie z.B. einer integrierten Schaltung, sein.

Unter dem Begriff "Beschichtungseinrichtung", wie hierin verwendet, ist eine Vorrichtung zu verstehen, die eingerichtet ist, eine Flüssigbeschichtung (Liquid Coating) auf einer Dokumentenoberfläche aufzubringen, um so eine Beschichtung der Oberfläche, insbesondere flächenselektiv nur in definierten Oberflächenbereichen zu erzeugen. Das Erzeugen der Beschichtung umfasst dabei zumindest das Aufbringen der Flüssigbeschichtung, kann aber auch nachfolgende Prozessschritte, insbesondere einen Aushärteprozess (Curing), etwa unter Einsatz von Wärme oder elektromagnetischer Strahlung (insbesondere UV-Strahlung) umfassen.

Unter dem Begriff "Verzerrung", wie hierin verwendet, ist insbesondere eine Deformation der Gestalt einer definierten (Teil-)Fläche gegenüber einer Referenz-Gestalt (Soll-Gestalt) zu verstehen. Dabei kommt es zu einer Verfälschung der Geometrie, insbesondere der Flächengeometrie, der Geometrie der Kontur der Fläche und/oder von Ausmaßen der Fläche, gegenüber der entsprechenden Geometrie der Referenz-Gestalt. Einfache Beispiele für eine solche Verzerrung sind eine Kissenverzerrung und eine Tonnenverzerrung, wie sie auf dem Gebiet der Optik und Computergrafik sowie bei der Darstellung von geometrischen Formen, insbesondere Rechtecken, auf Bildröhren bekannt sind.

Unter "Zusammenwirken der Ist-Gestalt der beschichteten Teilfläche mit der Form der Oberfläche im Bereich der Teilfläche", wie hierin verwendet, ist die Überlagerung der Verzerrung der Soll-Gestalt zur Erzeugung der Ist-Gestalt mit der (Gegen-)Verzerrung zu verstehen, die sich durch eine unebene Form der Oberfläche im Bereich der Teilfläche ergibt. Diese Überlagerung führt dazu, dass die in der Ist-Gestalt verkörperte Verzerrung der Soll-Gestalt zumindest teilweise kompensiert wird, sodass die sich aus der Überlagerung ergebende, wahrnehmbare Gestalt der beschichteten Teilfläche der Soll-Gestalt mehr ähnelt als die Ist-Gestalt (ohne diese Überlagerung), insbesondere - zumindest näherungsweise - mit der Soll-Gestalt übereinstimmt.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier gegebenenfalls verwendet wird, ist im Sinne von "zwei oder mehr" zu verstehen.

Die Begriffe "erste/r/s", "zweite/r/s", "dritte/r/s" und ähnliche Begriffe in der Beschreibung und in den Ansprüchen werden zur Unterscheidung zwischen ähnlichen bzw. ansonsten gleich benannten Elementen und nicht unbedingt zur Beschreibung einer sequenziellen, räumlichen oder chronologischen Reihenfolge verwendet. Es versteht sich, dass die so verwendeten Begriffe unter geeigneten Umständen austauschbar sind und dass die hierin beschriebenen Ausführungsformen der Erfindung auch in anderen als den hier beschriebenen oder dargestellten Reihenfolgen funktionieren können.

Unter dem Begriff "konfiguriert" oder "eingerichtet" eine bestimmte Funktion zu erfüllen, (und jeweiligen Abwandlungen davon), wie er hier gegebenenfalls verwendet wird, ist zu verstehen, dass eine diesbezügliche Vorrichtung oder Komponente davon bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das Konfigurieren mittels einer Auswahl einer dieser Konfigurationen bzw. Betriebsmodi erfolgen kann.

Bei dem Verfahren nach dem ersten Aspekt wird somit eine aufgrund einer (kontrollierten oder unkontrollierten) durch eine Verformung der relevanten Oberfläche des Dokuments bewirkten Individualisierung des Dokuments entgegengewirkt, indem die Gestalt der flächenselektiv zu beschichtenden Teilfläche der Oberfläche gegenüber ihrer angestrebten Soll-Gestalt derart vorverzerrt wird, dass diese Vorverzerrung eine durch die Deformation bewirkte Verzerrung zumindest anteilig kompensiert, so dass sich die bei einer Aufsicht auf die flächenselektiv beschichtete Oberfläche wahrnehmbare resultierende Gestalt der beschichteten Teilfläche der Soll-Gestalt nähert oder idealerweise damit, zumindest im Wesentlichen, übereinstimmt. Auf diese Weise ist es möglich, eine Mehrzahl von gleichartigen Dokumenten zu schaffen, die trotz solcher unkontrollierten und/oder dokumentenindividuellen Deformationen ein - zumindest im Wesentlichen - gleiches Erscheinungsbild, insbesondere im Hinblick auf die Gestalt der beschichteten Teilflächen, aufweisen. So lässt sich die bei einer Flüssigkeitsbeschichtung von Dokumenten, insbesondere von ein Laminat aufweisenden Dokumenten, erreichbare Qualität verbessern.

Nachfolgend werden verschiedene beispielhafte Ausführungsformen der vorliegenden Lösung, insbesondere des Verfahrens nach dem ersten Aspekt, beschrieben, die jeweils, soweit dies nicht ausdrücklich ausgeschlossen wird oder technisch unmöglich ist, beliebig miteinander sowie mit den weiteren beschriebenen anderen Aspekten der Lösung kombiniert werden können.

Bei einigen Ausführungsformen wird die Geometrieinformation zumindest anteilig mittels einer Bildverarbeitung aus der Ist-Bildinformation gewonnen. So kann insbesondere eine Definition der Beschichtungsinformation in Abhängigkeit von Merkmalen des Ist-Bilds, insbesondere von Individualisierungsinformation (z.B. einer im Ist-Bild enthaltenen Personalisierung), erfolgen. Damit kann dann gezielt eine Beschichtung des Oberflächenbereichs (Teilfläche) der Oberfläche des Dokuments veranlasst werden, die diese Individualisierungsinformation, (z.B. als Schrift oder Symbol oder Foto) trägt.

Bei einigen Ausführungsformen wird (stattdessen oder kumulativ) die Geometrieinformation zumindest anteilig mittels einer Bildverarbeitung aus der Referenz-Bildinformation gewonnen. So kann insbesondere eine Definition der Beschichtungsinformation in Abhängigkeit von Merkmalen des Referenz-Bilds, insbesondere von einer für eine Mehrzahl von zu beschichtenden Dokumenten gleichen Kennzeichnung (z.B. einer im Referenz-Bild enthaltenen Identifikation eines Herausgebers der Dokumente, z.B. Bankkarte), erfolgen. Damit kann dann gezielt eine Beschichtung des Oberflächenbereichs (Teilfläche) der Oberfläche des Dokuments veranlasst werden, die diese Kennzeichnung, (z.B. als Schrift oder Symbol oder Foto) trägt. Beispielsweise könnte im Falle einer Bankkarte als Dokument eine solche Kennzeichnung durch einen Namen oder ein Logo der herausgebenden Bank und die o.g. Individualisierungsinformation bzw. Personalisierung durch einen Namen und/oder eine Kontonummer des (zukünftigen) Karteninhabers gegeben sein.

So kann auf besonders effiziente Weise ein und dieselbe Referenz-Bildinformation zu verschiedenen Zwecken eingesetzt werden, einerseits im Rahmen der Ermittlung einer etwaigen Deformation der Oberfläche gegenüber der Referenz-Oberfläche und andererseits zur Ermittlung der Soll-Gestalt der Teilfläche. Bei einigen Ausführungsformen weist das Verfahren des Weiteren ein Ermitteln der Geometrieinformation in Abhängigkeit vom Ergebnis einer automatischen Analyse eines die Soll-Gestalt auf seiner Oberfläche verwirklichenden Musterdokuments oder eines Abbilds davon anhand eines die Teilfläche kennzeichnenden Analysekriteriums auf. Dabei wird mittels der Analyse eine Gestalt eines zur Teilfläche korrespondierenden Flächenbereichs auf dem Musterdokument bzw. dessen Abbild ermittelt und als Soll-Gestalt festgelegt. Insbesondere kann die den Flächenbereich enthaltende Oberfläche des Musterelements auch vollständig oder anteilig als die Referenz-Oberfläche genutzt werden. Die Analyse kann dann entsprechend ein sensorisches, insbesondere bildsensorisches oder abstandssensorisches, Erfassen dieser Oberfläche des Musterelements als Referenz-Oberfläche zur Erzeugung der Referenz-Bildinformation umfassen. Die Verwendung eines Musterdokuments ermöglicht es dem Verfahren somit, eigenständig die Geometrieinformation und ggf. auch die Referenz-Bildinformation zu generieren, ohne dass diese vorab außerhalb des Verfahrens ermittelt und vorgehalten werden muss. Somit wird das Verfahren auch besonders flexibel in der Handhabung, da ein Änderung der Geometrieinformation bzw. Referenz-Bildinformation durch bloßes Auswechseln des Musterdokuments bewirkt und anschließende Analyse des Musterdokuments im Rahmen des Verfahrens werden kann.

Insbesondere ist oder wird gemäß einiger Ausführungsformen das Analysekriterium zumindest anteilig als farbenabhängiges Kriterium definiert und die Analyse umfasst dann ein Ermitteln des Flächenbereichs durch Anwendung des farbenabhängigen Kriteriums auf eine Farbverteilung auf dem auf dem Musterdokument bzw. seinem Abbild.

Diese Analyse kann insbesondere ein Auswerten der Farbverteilung derart umfassen, dass dabei ein Bereich auf dem Musterdokument bzw. seinem Abbild, dessen Farbe gemäß dem farbenabhängigen Kriterium einer vorgegebenen Referenz-Farbe entspricht oder innerhalb eines vorgegebenen Referenz-Farbbereichs liegt, als ein zur Teilfläche korrespondierender Flächenbereich identifiziert wird. Beispielsweise könnte der Flächenbereich eine bestimmte Farbe oder eine Farbe aus einem bestimmten vorgegebenen Farbbereich eines definierten Farbschemas oder Farbraums aufweisen, sodass im Rahmen der Analyse nur die Oberflächenanteile mit dieser Farbe bzw. aus diesem Farbbereich als dem zu ermittelnden Flächenbereich zugehörig bestimmt werden.

Bei einigen Ausführungsformen ist oder wird bei Musterdokumenten mit Oberflächenstruktur, das Analysekriterium, anstelle oder kumulativ mit dem vorgenannten farbenabhängigen Kriterium, zumindest anteilig als oberflächenstrukturabhängiges Kriterium definiert und die Analyse umfasst ein Ermitteln des Flächenbereichs durch Anwendung des oberflächenstrukturabhängiges Kriteriums bezüglich einer Oberflächenstruktur des Musterdokuments oder seines Abbilds.

Diese Analyse kann insbesondere ein Auswerten der Oberflächenstruktur derart umfassen, dass dabei ein Bereich auf dem Musterdokument bzw. seinem Abbild, dessen Oberflächenstruktur gemäß dem oberflächenstrukturabhängiges Kriterium einer vorgegebenen Struktur (insbesondere Höhe, Rauigkeit oder Strukturart) entspricht oder innerhalb eines vorgegebenen Referenz-Strukturbereichs (insbesondere Höhenbereichs, Rauigkeitsbereichs oder Strukturart) liegt, als ein zur Teilfläche korrespondierender Flächenbereich identifiziert wird. Als Strukturart kann beispielsweise eine einer bestimmten Schraffierung entsprechende Höhen- und/oder Tiefenstruktur der Oberfläche im Bereich des Flächenbereichs dienen.

Bei einigen Ausführungsformen erfolgt das Ermitteln der Soll-Gestalt unter Verwendung eines Formerkennungsprozesses, um zumindest ein durch den Flächenbereich dargestelltes Formelement aus einem vordefinierten Formenschatz als zumindest anteilige Soll-Gestalt zu erkennen. So lassen sich insbesondere vordefinierte Formen als Soll-Gestalt nutzen, selbst wenn sie nicht vollständig oder fehlerfrei auf dem Musterdokument vorhanden sind. Der Formenschatz lässt sich zudem entsprechend den vorgenannten farbabhängig bzw. oberflächenstrukturabhängigen Kriterien an deren Stelle oder kumulativ mit zumindest einem davon als Analysekriterium zur Identifikation des Flächenbereichs nutzen.

Insbesondere kann der Formerkennungsprozess einen Prozess zur optischen Zeichenerkennung, OCR, umfassen, um zumindest ein durch den Flächenbereich dargestelltes Zeichen, etwa eine Ziffer oder ein Zeichen eines Alphabets oder einer Zeichenbibliothek, als zumindest anteilige Soll-Gestalt zu erkennen. So lassen sich insbesondere aus zumindest ein definiertes Zeichen enthaltende Beschriftungen auf dem Musterdokument zur Identifizierung des Flächenbereichs nutzen.

Bei einigen Ausführungsformen erfolgt das Ermitteln der etwaigen Deformation der Oberfläche gegenüber der Referenz-Oberfläche und/oder das Ermitteln der Beschichtungsinformation unter Verwendung eines dafür trainierten maschinen-lernen-basierten Prozesses, insbesondere eines entsprechend trainierten künstlichen neuronalen Netzes. So ist eine besonders flexible Lösung, die zur Ermittlung verschiedenster Deformationen bzw. zur Ermittlung verschiedenster Flächenbereiche im Hinblick auf die Gewinnung der Beschichtungsinformation einsetzbar sind, implementierbar.

Bei einigen Ausführungsformen umfasst das Ermitteln der etwaigen Deformation der Oberfläche gegenüber der Referenz-Oberfläche ein Ermitteln einer Art und/oder Stärke der Deformation der Oberfläche und das Ermitteln der Beschichtungsinformation erfolgt in Abhängigkeit von der so ermittelten Art und/oder Stärke der Deformation. Beispielsweise kann die Stärke der Deformation in Abhängigkeit einer bestimmten lokalen Abweichung der Oberfläche von einem ebenen Ausgangszustand des Dokuments oder von einer durch Approximation oder Mittelung bestimmten Regressionsebene bzw. Mittelebene der deformierten Oberfläche bestimmt werden. Als Art der Deformation kann insbesondere eine Einordnung einer Deformation als konvexe oder konkave Deformation oder ein Grad (z.B. Ordnung) einer Approximation der Deformation, beispielsweise mittels Splines oder polynomialer Approximation, dienen. So lässt sich eine Deformation insbesondere quantifizieren oder klassifizieren, um die nachfolgende Bestimmung der Ist-Gestalt mittels Verzerrung aus der Soll-Gestalt zu erleichtern, insbesondere leichter zu automatisieren.

Bei einigen Ausführungsformen erfolgt das Ermitteln der Beschichtungsinformation auf Basis eines Bildabschnitts des Ist-Bilds, der die Teilfläche enthält aber zumindest einen anderen Bereich des Ist-Bilds nicht enthält. Der Bildabschnitt wird in Abhängigkeit einer ermittelten Variabilität der Ist-Gestalt im Rahmen eines Ensembles von mehreren früheren Ausführungen des Verfahrens unter Verwendung von zu dem Dokument gleichartigen Dokumenten bestimmt. Der Bildabschnitt kann dabei insbesondere mehrere nichtzusammenhängende Unterabschnitte aufweisen. Dieses Vorgehen hat den Vorteil, dass im Rahmen der Ensemblebetrachtung herausgefunden werden kann, in welchen Bereich die Gestalt der Teilfläche im Ensemble und somit als Approximation insgesamt auch jenseits des Ensembles, variiert. Die Gestalt kann dabei insbesondere die Form, Lage (Position und Orientierung) und/oder Größe der jeweiligen Teilfläche angeben. In der Folge kann das Ermitteln der Beschichtungsinformation auf den derart ermittelten Bildabschnitt bzw. variablen Bildbereich beschränkt werden, was das zu einer Effizienzsteigerung und/oder Performanzsteigerung des Verfahrens genutzt werden kann.

Bei einigen Ausführungsformen umfasst das Ermitteln der Beschichtungsinformation ein Ausrichten der durch die Beschichtungsinformation repräsentierten Ist-Gestalt der zu beschichteten Teilfläche an einer bei der Aufbringung der Flüssigbeschichtung vorliegenden, insbesondere sensorisch erfassten, Orientierung der flächenselektiv zu beschichtenden Oberfläche. So kann sichergestellt werden, dass die Beschichtung in einer korrekten vorgesehenen Orientierung (und Lage) relativ zum Dokument auf dieses aufgebracht wird und somit Beschichtungsfehlern bzw. einem entsprechenden Ausschuss entgegengewirkt wird.

Bei einigen Ausführungsformen weist das Ermitteln der Beschichtungsinformation ein Erstellen von Druckdaten auf, die ein Drucklayout für das flächenselektive Flüssigbeschichten der Oberfläche im Bereich der ermittelten Teilfläche definieren. Das Ansteuern der Beschichtungseinrichtung erfolgt in Abhängigkeit von den Druckdaten, um die Beschichtungseinrichtung zu veranlassen, die Oberfläche flächenselektiv in dem im Drucklayout der Teilfläche zugeordneten Bereich der Oberfläche mittels Bedrucken mit der Flüssigkeitsbeschichtung zu versehen. So lassen sich aufgrund der mittels Drucken, z.B. Tintenstrahldrucken, erreichbaren hohen Genauigkeit und Flexibilität bzgl. des Druckbilds besonders genaue Flüssigkeitsbeschichtungen erzielen.

Insbesondere kann das Erstellen der Druckdaten ein Konvertieren einer bereits durch die Ist-Bildinformation definierten Farbgebung im Bereich der ermittelten Teilfläche oder ein Neufestlegen einer Farbgebung für diesen Bereich, jeweils für das Drucklayout, umfassen. Wenn beispielsweise im Ist-Bild, der zu beschichtende Bereich eine bestimmte Farbgebung aufweist (z.B. grün) dann kann das Drucklayout so definiert werden, dass es im Bereich der ermittelten Teilfläche einen der Farbgebung zugeordneten Grauwert oder schwarz/weiß-Wert erhält. Dies ist insbesondere sinnvoll, wenn die die ursprüngliche Farbgebung aus dem Ist-Bild mit der für die Beschichtung verwendeten Flüssigkeit nicht dargestellt werden kann. Dies kann insbesondere der Fall sein, wenn die Flüssigkeit eine hohe Transparenz aufweist oder sogar farblos ist.

Bei einigen Ausführungsformen wird als das mit der Flüssigkeitsbeschichtung zu versehende Dokument ein bereits auf der Oberfläche kontrolliert vorbedrucktes oder vorverformtes Dokument verwendet. Die hat insbesondere den Vorteil, dass die Vorbedruckung bzw. eine mittels der Vorverformung erzeugte Form oder Oberflächenstruktur für die Bestimmung einer (anderen), insbesondere unkontrollierten, Verformung des Dokuments im Rahmen des Abgleichens der Ist-Bildinformation mit der Referenz-Bildinformation genutzt werden kann.

Bei einigen Ausführungsformen wird als das mit der Flüssigkeitsbeschichtung zu versehende Dokument ein kartenartiges Dokument, insbesondere Sicherheitsdokument, verwendet. Gerade bei kartenartigen Dokumenten, wie etwa Smart-cards oder Ausweisdokumenten bzw. Datenseiten von Ausweisen, weist das Dokument in der Regel ein mehrschichtiges Laminat aus Schichten verschiedenen Materials auf, so dass hier unkontrollierte Verformungen beim Laminieren oder Lagern der Dokumente vor der Beschichtung regelmäßig auftreten können, sodass das Verfahren hier besonders gewinnbringend eingesetzt werden kann.

Ein zweiter Aspekt der vorliegenden Lösung betrifft ein System zum flächenselektiven Beschichten einer Teilfläche einer Oberfläche eines individuellen physischen Dokuments mit einer Flüssigbeschichtung. Das System weist auf: (i) eine Datenverarbeitungseinrichtung; und (ii) eine durch die Datenverarbeitungseinrichtung ansteuerbare Beschichtungseinrichtung zum selektiven Flüssigbeschichten von Oberflächen. Die Datenverarbeitungseinrichtung ist konfiguriert, das Verfahren nach dem ersten Aspekt auszuführen und dabei die Beschichtungseinrichtung verfahrensgemäß anzusteuern, um diese zu veranlassen, die Oberfläche des Dokuments gemäß der Beschichtungsinformation flächenselektiv in der definierten Teilfläche mit der Flüssigkeitsbeschichtung zu versehen.

Ein dritter Aspekt der vorliegenden Lösung betrifft ein Computerprogramm oder Computerprogramprodukt, insbesondere ein nicht-flüchtiges computerlesbares Speichermedium, jeweils mit Anweisungen, die bei ihrer Ausführung auf einem Computer oder auf einer Multi-Computer-Plattform bewirken, dass dieser bzw. diese das Verfahren nach dem ersten Aspekt ausführt.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen. Die Module können insbesondere dazu konfiguriert sein oder jedenfalls so einsetzbar sein, dass sie im Sinne von verteiltem Rechnen (engl. "Distributed computing" auf verschiedenen Geräten (Computern bzw. Prozessoreinheiten ausgeführt werden, die geografisch voneinander beabstandet und über ein Datennetzwerk miteinander verbunden sind.

Das System nach dem zweiten Aspekt kann entsprechend einen Speicher aufweisen, in dem das Computerprogramm abgelegt ist. Alternativ kann das System auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Die in Bezug auf den ersten Aspekt der Erfindung erläuterten Merkmale und Vorteile gelten entsprechend auch für die weiteren Aspekte der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

### Dabei zeigt

**Fig. 1** schematisch ein Flussdiagramm zur Veranschaulichung einer beispielhaften Ausführungsform des Verfahrens nach dem ersten Aspekt;
**Fig. 2** schematisch zu dem Verfahren aus Fig. 1 korrespondierende Abfolge von zu einzelnen Verfahrensschritten/Verarbeitungsprozessen des Verfahrens korrespondierenden Zwischenzuständen eines zu beschichtenden Dokuments; und
**Fig. 3** eine beispielhafte Ausführungsform eines Systems nach dem zweiten Aspekt zur Ausführung eines lösungsgemäßen Verfahrens, insbesondere des Verfahrens aus Fig. 1.

In den Figuren bezeichnen gleiche Bezugszeichen gleiche, ähnliche oder einander entsprechende Elemente. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich werden. In den Figuren dargestellte Verbindungen und Kopplungen zwischen funktionellen Einheiten und Elementen können, soweit nicht ausdrücklich anders angegeben, auch als indirekte Verbindung oder Kopplung implementiert werden. Soweit nicht im Einzelnen anders angegeben, können funktionale Einheiten insbesondere als Hardware, Software oder eine Kombination aus Hardware und Software implementiert werden.

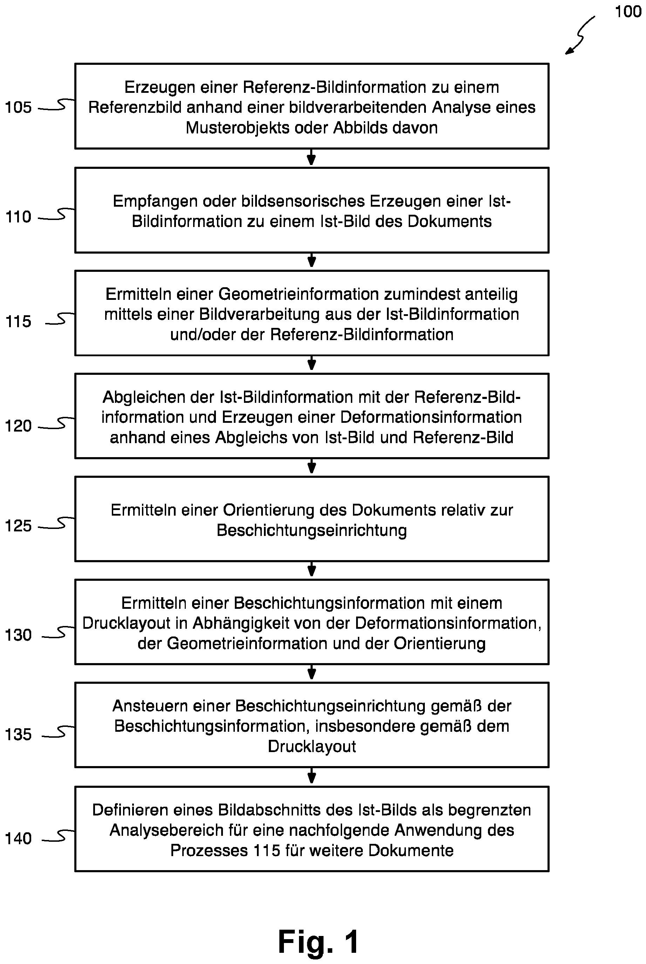

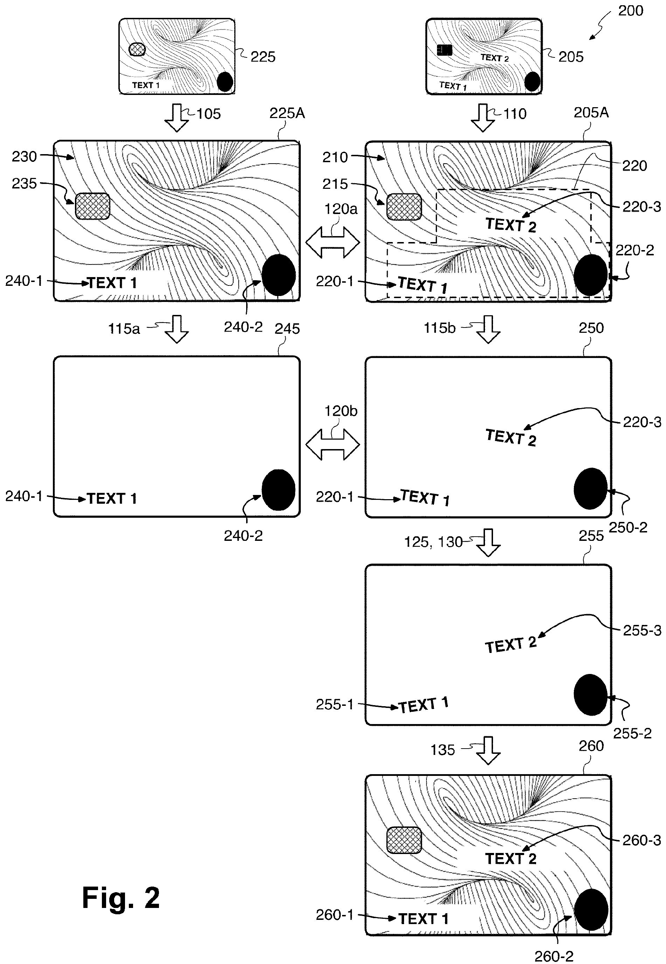

Bei der in **Fig. 1** ist eine beispielhafte Ausführungsform 100 des Verfahrens nach dem ersten Aspekt zum Ansteuern einer Beschichtungseinrichtung zum flächenselektiven Beschichten einer Oberfläche eines individuellen physischen Dokuments mit einer Flüssigbeschichtung illustriert. **Fig. 2** illustriert dazu eine Abfolge 200 verschiedener Zwischenzustände, die im Rahmen des Verfahrens 100 erreicht werden. Daher wird bereits bei der Beschreibung des Verfahrens 100 auch auf Fig. 2 Bezug genommen.

Im Rahmen des Verfahrens 100 wird in einem Prozess 105 anhand eines, insbesondere kartenartigen, Musterdokuments 225 (oder eines Abbilds, insbesondere Fotos davon) eine Referenz-Bildinformation erzeugt, die als Referenz-Bild 225A ein Bild einer als fehlerfreie Referenz dienenden Referenz-Oberfläche des Musterdokuments 225, repräsentiert. Die Referenz-Bildinformationen bzw. das Referenzbild 225 können insbesondere durch (digitales) Fotografieren der Oberfläche des Musterdokuments gewonnen werden, vorzugsweise in Form digitaler Bilddaten.

Das Referenzbild 225 zeigt ein, z.B. vorgedrucktes, Hintergrundbild 230, ein Abbild eines elektronischen Chips 235, der in dem Musterdokument integriert ist, sowie eine aus einem Textelement 240-1 und einem Grafikelement 240-2 bestehende Kennzeichnung, die auf einer Mehrzahl, insbesondere Vielzahl verschiedener verfahrensgemäß zu beschichtender Dokumente vorhanden ist. Beispielsweise kann es sich dabei um den Namen und ein Logo eines Herausgebers des Dokuments, beispielsweise im Falle einer Bank- oder Kreditkarte einer Bank oder eines Kreditkartenunternehmens handeln.

In einem weiteren Prozess 115a werden aus dem Referenz-Bild 225A per Bildverarbeitung unter Anwendung eines farbenabhängigen Analysekriteriums die zwei Bildelemente 240-1 (Textelement) und 240-2 (Grafikelement) extrahiert. Gemäß dem Analysekriterium zeichnen sich die zu extrahierenden Bildelemente 240-1 und 240-2 durch eine bestimmte vordefinierte Farbe (in den Figuren flächig schwarz dargestellt) auf, die sich von der Farbe des Hintergrundbilds 230 unterscheidet. Statt einer einzigen Farbe kann auch ein bestimmter Farbbereich in einem definierten Farbraum (z.B. RGB) als farbenabhängiges Analysekriterium verwendet werden, sodass nur Bildelemente extrahiert werden, deren Farbgebung innerhalb dieses Farbereichs liegt.

Alternativ oder kumulativ mit einem farbenabhängigen Analysekriterium kann insbesondere auch ein oberflächenstrukturabhängiges Analysekriterium eingesetzt werden, sodass nur Oberflächenbereiche bzw. Bildelemente mit einer sensorische erfasste Oberflächenstruktur, einer vorgegebenen Oberflächenstruktur (z.B. Rauigkeit oder Materialeigenschaft) entspricht oder innerhalb eines vorgegebenen Referenz-Strukturbereichs liegt, als Bildelemente bzw. zu beschichtende Flächenbereiche extrahiert werden.

Zudem kann alternativ oder kumulativ ein Formerkennungsprozesses eingesetzt werden, um zumindest ein im Referenzbild 225A dargestelltes Formelement aus einem vordefinierten Formenschatz als zumindest anteilige Soll-Gestalt zu erkennen. Dies ist insbesondere im Hinblick auf das Erkennen von Textelementen oder sonstigen vordefinierten Zeichen oder Zeichenketten (z.B. mittels OCR-Technologie) sinnvoll, wobei der Formenschatz (z.B. Alphabet) als Analysekriterium dienen kann.

Im Prozess 115a wird unter Anwendung des Analysekriteriums Geometrieinformation 245 erzeugt, die, beispielsweise in Form eines Layouts, diese beiden Bildelemente 240-1 und 240-2 sowie deren jeweilige Lage und Orientierung innerhalb des Referenzbilds 225A repräsentiert (in Form von entsprechenden Daten). Die Bildelemente 240-1 und 240-2 definieren zumindest anteilig eine Soll-Gestalt (insbesondere Form) einer mit einer Flüssigbeschichtung zu versehenden Teilfläche der Oberfläche zumindest eines Dokuments 205, typischerweise jedoch einer Mehrzahl gleichartiger solcher Dokumente 205. die Soll-Gestalt weist hier entsprechend zumindest die zwei nichtzusammenhängenden Flächenbereiche 240-1 und 240-2 auf.

Die Prozesse 105 und 115a können den nachfolgend beschriebenen weiteren Prozessschritten insbesondere zeitlich vorgelagert durchgeführt werden.

Das Verfahren 100 umfasst des Weiteren einen Prozess 110, bei dem eine Bildinformation ("Ist-Bildinformation") mit einem Vision-System (insbesondere Kamera) bildsensorisch erzeugt wird oder in Form von Bilddaten aus einer Datenquelle empfangen wird, wobei die Bildinformation ein Abbild ("Ist-Bild") 205A einer relevanten Oberfläche eines zu beschichtenden Dokuments 205 repräsentiert.

Das Ist-Bild 205A zeigt ein, z.B. vorgedrucktes, Hintergrundbild 210, ein Abbild eines elektronischen Chips 215, der in dem Dokument 205 integriert ist, sowie eine aus einem Textelement 220-1 und einem Grafikelement 220-2 bestehende Kennzeichnung, die auf einer Mehrzahl, insbesondere Vielzahl verschiedener verfahrensgemäß zu beschichtender Dokumente 205 vorhanden ist. Wie beim Musterdokument 225 kann es sich dabei beispielsweise um den Namen und ein Logo eines Herausgebers des Dokuments, beispielsweise im Falle einer Bank- oder Kreditkarte einer Bank oder eines Kreditkartenunternehmens handeln. Darüber hinaus enthält das Ist-Bild 205A ein weiteres Bildelement 220-3, bei dem es sich um eine dokumentenindividuelle Information, insbesondere Personalisierung) handelt, die nicht bereits auf dem Musterdokument 225 bzw. dessen Abbild 225A vorhanden ist. Das Ist-Bild 205A unterscheidet sich somit vom Referenz-Bild 225A zumindest durch das Bildelement 220-3. Ein weiterer Unterschied besteht jedoch im vorliegenden Beispiel der Fig. 2 darin, dass aufgrund einer Deformation der Oberfläche des Dokuments 205 die Bildelemente 220-1 bis 220-3 bei einer Aufsicht auf das Dokument 205 und entsprechend in dessen Abbild (Ist-Bild) 205A verzerrt erscheinen (hier durch Schrägstellung der Bildelemente illustriert), während sie im Referenz-Bild 225A unverzerrt erscheinen.

In einer ersten Ausführungsvariante des Verfahrens 100 erfolgt im Rahmen eines Prozesses 120a ein Abgleich des Ist-Bilds 205A gegenüber dem Referenz-Bild 225A, um anhand etwaiger Abweichungen auf eine potenzielle Deformation des Dokuments 205 beziehungsweise seiner Oberfläche gegenüber einer ebenen Form schließen zu können. Im vorliegenden Beispiel werden daher die Verzerrungen im Ist-Bild 205A bezüglich der Bildelemente 220-1 und 220-2 gegenüber den dazu korrespondierenden Bildelementen 240-1 bzw. 240-2 erkannt und eine Art und Stärke einer entsprechenden Deformation rekonstruiert und als resultierende Deformationsinformation (in Datenform) bereitgestellt. Dies kann insbesondere mittels eines entsprechend angepassten maschinenlernen-basierten Prozesses, wie etwa einer Anwendung eines entsprechend trainierten künstlichen neuronalen Netzes, erfolgen.

In einem weiteren Prozess 115b werden, ähnlich wie im Prozess 115a, anhand eines Analysekriteriums, das insbesondere demjenigen aus dem Prozess 115a entsprechen kann, solche Bildelemente 220-1 bis 220-3 extrahiert, die dem Analysekriterium entsprechen.

Gemäß einer zweiten Ausführungsvariante des Verfahrens 100 findet anstelle des Prozesses 120a ein Prozess 120b zum Abgleich der aus dem Prozess 115a resultierenden Geometriedaten 245 mit den aus dem Prozess 115 b resultierenden Geometriedaten 250 statt, um auf entsprechende Weise, wie zuvor beschrieben, eine potenzielle Deformation des Dokuments 205 zu erkennen und entsprechende Deformationsinformationen zu erzeugen. Der Einsatz des Prozesses 120b anstelle des Prozesses 120a hat den Vorteil, dass hier der Vergleich bereits auf Basis der extrahierten Bildelemente und somit ohne Berücksichtigung der vollen Komplexität der Bilder 225A und 205A einschließlich deren sonstigen Bildinhalte (210,215, 230,235) durchgeführt werden kann.

Die Soll-Gestalt der zu erzeugenden Flüssigbeschichtung ergibt sich sodann durch Kombination der Geometrieinformationen 245 und 250, sodass die Soll-Gestalt die Bildelemente 240-1, 240-2 und zusätzlich das Bildelement 220-3 enthält. Es ist darauf hinzuweisen, dass die Soll-Gestalt je nach Anwendungsfall und Ausführungsform des Verfahrens auch ausschließlich aus den Geometrieinformationen 245 oder aus den Geometrieinformationen 250 abgeleitet beziehungsweise dadurch definiert werden kann. Ersteres ist insbesondere dann sinnvoll, wenn ausschließlich Flächenbereiche Dokuments 205 beschichtet werden sollen, die bereits entsprechend im Referenz-Bild 225A durch entsprechende Bildelemente repräsentiert sind, während Letzteres vor allem dann relevant wird, wenn Oberflächenbereiche mit dokumentenindividueller Information beschichtet werden sollen. Soweit einander entsprechende Bildelemente in beiden Geometrieinformationen 245 und 250 enthalten sind, wird vorzugsweise nur jeweils eines davon übernommen, um eine Duplizierung zu vermeiden.

In einem weiteren Prozess 125, kann insbesondere auf optischer Basis, eine Orientierung des zu beschichtenden Dokuments 205 relativ zu der zu seiner Beschichtung eingesetzten Beschichtungseinrichtung sensorisch erfasst werden. Somit kann insbesondere eine etwaige Abweichung von einer Soll-Ausrichtung erkannt und bei der im weiteren folgenden Definition einer ein Beschichtungslayout definierten Beschichtungsinformation 255 in einem weiteren Prozess 130 berücksichtigt werden.

In dem Prozess 130 dienen die vorausgehend gewonnenen die Soll-Gestalt definierenden Geometrieinformationen, die bestimmte Orientierung des Dokuments 205 sowie die Deformationsinformation als Eingangsgrößen. Als Ergebnis liefert der Prozess 130 die Beschichtungsinformation 255, die insbesondere ein Beschichtungslayout für eine mittels einer Beschichtungseinrichtung auf dem Dokument 205 aufzubringende Flüssigbeschichtung repräsentiert. In Abhängigkeit von der Deformationsinformation werden im Rahmen des Prozesses 130 die Bildelemente 220-1 bis 220-3 in einer derart verzerrten Form in die Bildinformationen beziehungsweise das Beschichtungslayout übernommen, dass diese Verzerrung eine die deformationsbedingte Verzerrung dieser Bildelemente im Ist-Bild 205 bzw. in den Geometrieinformationen 250 zumindest anteilig kompensiert (ähnlich wie eine Tonnenverzerrung als Gegenverzerrung eine ursprüngliche Kissenverzerrung kompensieren kann). Das Erzeugen der Beschichtungsinformation kann insbesondere auch eine Konvertierung in dem Sinne umfassen, dass eine in der Geometrieinformation optional enthaltene und durch die Ist-Bildinformation definierten Farbgebung der zu beschichtenden Teilfläche konvertiert wird in eine andere "Farbgebung" insbesondere schwarz/weiß oder Graustufen, um damit das Aufbringen der Flüssigbeschichtung zu kontrollieren. Die neue Farbgebung kann dann insbesondere eine ortsabhängig variable Dicke der aufzubringenden Flüssigbeschichtung oder eine Färbung derselben codieren.

Es folgt ein weiterer Prozess 135, in dem eine Beschichtungseinrichtung gemäß der Beschichtungsinformation angesteuert wird, um die Oberfläche des Dokuments 205 entsprechend dem Beschichtungslayout mit einer Flüssigbeschichtung zu versehen. Es resultiert somit das beschichtete Dokument 260, indem die ursprüngliche deformationsbedingte Verzerrung der Bildelemente 220-1 bis 220-3 zumindest teilweise, idealerweise wie hier vollständig, kompensiert ist (vgl. unverzerrte Bildelemente 260-1 bis 260-3).

Die Soll-Gestalt der zu erzeugenden Flüssigbeschichtung ergibt sich sodann durch Kombination der Geometrieinformationen 245 und 250, sodass die Soll-Gestalt die Bildelemente 240-1, 240-2 und zusätzlich das Bildelement 220-3 enthält. Es ist darauf hinzuweisen, dass die Soll-Gestalt je nach Anwendungsfall und Ausführungsform des Verfahrens auch ausschließlich aus den Geometrieinformationen 245 oder aus den Geometrieinformationen 250 abgeleitet beziehungsweise dadurch definiert werden kann. Ersteres ist insbesondere dann sinnvoll, wenn ausschließlich Flächenbereiche Passdokuments 205 beschichtet werden sollen die bereits entsprechend im Referenz-Bild 225A durch entsprechende Bildelemente repräsentiert sind, während Letzteres vor allem dann relevant wird, wenn Oberflächenbereiche mit dokumentenindividueller Information beschichtet werden sollen.

In einem weiteren Prozess 125, kann insbesondere auf optischer Basis, eine Orientierung des zu beschichtenden Dokuments 205 relativ zu der zu seiner Beschichtung eingesetzten Beschichtungseinrichtung sensorisch erfasst werden. Somit kann insbesondere eine etwaige Abweichung von einer Soll-Ausrichtung erkannt und bei der im weiteren folgenden Definition einer ein Beschichtungslayout definierten Beschichtungsinformation 255 in einem weiteren Prozess 130 berücksichtigt werden.

In dem Prozess 130 dienen die vorausgehend gewonnenen die Soll-Gestalt definierenden Geometrieinformationen, die bestimmte Orientierung des Dokuments 205 sowie die Deformationsinformation als Eingangsgrößen. Als Ergebnis liefert der Prozess 130 die Beschichtungsinformation 255, die insbesondere ein Beschichtungslayout für eine mittels einer Beschichtungseinrichtung auf dem Dokument 205 aufzubringende Flüssigbeschichtung repräsentiert und eine Gestalt ("Ist-Gestalt") der zu beschichtenden Flächenbereiche (zusammen: "Teilfläche") definiert. In Abhängigkeit von der Deformationsinformation werden im Rahmen des Prozesses 130 die Bildelemente 220-1 bis 220-3 in einer derart verzerrten Form in die Bildinformationen beziehungsweise das Beschichtungslayout übernommen, dass diese Verzerrung eine die deformationsbedingte Verzerrung dieser Bildelemente im Ist-Bild 205 bzw. in den Geometrieinformationen 250 zumindest anteilig kompensiert (ähnlich wie eine Tonnenverzerrung als Gegenverzerrung eine ursprüngliche Kissenverzerrung kompensieren kann). Auch dieser Prozess 130 kann insbesondere mittels eines entsprechend angepassten maschinenlernen-basierten Prozesses, wie etwa einer Anwendung eines entsprechend trainierten künstlichen neuronalen Netzes, erfolgen.

Es folgt ein weiterer Prozess 135, in dem eine Beschichtungseinrichtung gemäß der Beschichtungsinformation angesteuert wird, um die Oberfläche des Dokuments 205 entsprechend dem Beschichtungslayout flächenselektiv mit einer Flüssigbeschichtung zu versehen. Es resultiert somit das beschichtete Dokument 260, indem die ursprüngliche deformationsbedingte Verzerrung der Bildelemente 220-1 bis 220-3 zumindest teilweise, idealerweise wie hier vollständig, kompensiert ist (vgl. unverzerrte Bildelemente 260-1 bis 260-3). Die flächenselektive Beschichtung erfolgt hierbei nur im Bereich der die Bildelemente 255-1 bis 255-3 darstellenden Oberflächenbereiche (zusammen: "Teilfläche"), während die anderen Bereiche der Oberfläche des durch die Beschichtung aus dem Dokument 205 hervorgegangenen Dokuments 260 unbeschichtet bleiben.

Optional kann nur ein weiterer Prozess 140 folgen, indem auf Basis der Ergebnisse des Prozesses 115b ein begrenzter Bildabschnitt 220 im Ist-Bild identifiziert wird, innerhalb dessen die gemäß dem Analysekriterium extrahierten Bildelemente 220-1 bis 220-3 liegen. Dieser Bild Abschnitt 220 kann nun für nachfolgende weitere Verfahrens Durchläufe bezüglich weiterer Dokumente als Bildanalysebereich derart definiert werden, dass der Prozess 115b dort nur im Hinblick auf diesen begrenzten Bildanalysebereich durchgeführt wird. Der Prozess 140 kann auch derart definiert sein, dass es sich auf ein gesamtes Ensemble vorausgegangener Durchläufe des Prozesses 115b einschließlich des zuletzt in Bezug auf das Dokument 205 durchgeführten Prozessdurchlaufs bezieht und den Bildanalysebereich auf Basis einer Mehrzahl, insbesondere sämtlicher, der entsprechenden Bildabschnitten aus diesen Ensemble von Prozessdurchläufen definiert. Der Prozess 140 kann entsprechend insbesondere so festgelegt sein oder werden, dass der aktuell ermittelte Bildabschnitt mit einem aus früheren Prozessdurchläufen dieses Prozesses resultierenden Bildabschnitt verglichen wird, und eine Anpassung des Bildabschnitts nur dann erfolgt, wenn der zuletzt ermittelte Bildabschnitt über den aus früheren Prozessdurchläufen resultierenden Bildabschnitt hinausgeht.

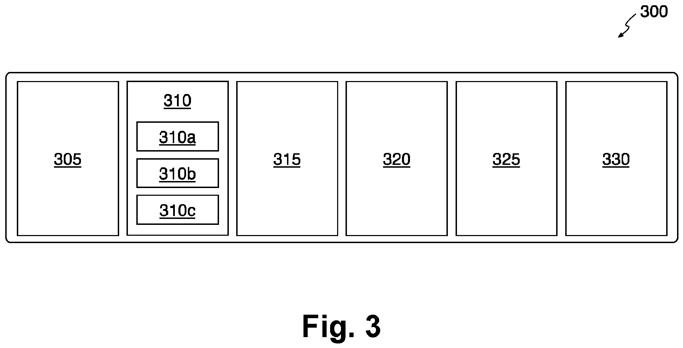

**Fig. 3** illustriert schließlich ein beispielhaftes System 300 zur Durchführung des Verfahrens 100 einschließlich eines gemäß dem Prozess 135 gesteuerten Beschichtungsprozesses selbst.

Das System 300 verfügt über eine Mehrzahl von im Rahmen einer Verarbeitungsstrecke hintereinandergeschalteten Modulen 305 bis 325 und ist insbesondere zur Ausführung des Verfahrens 100 konfiguriert. Ein erstes Modul ist als Input-Modul 305 konfiguriert und dient dazu, die zu beschichtenden Dokumente, die insbesondere als Dokumentenstapel zugeführt werden können, aufzunehmen und sodann einzelnen dem nächsten Modul 310 zur weiteren Verarbeitung zuzuführen. Des Weiteren kann das Input-Modul 305 auch konfiguriert sein, ein Musterdokument 225 aufzunehmen und dem Modul 310 zuzuführen. Dazu kann entweder derselbe Transportweg genutzt werden, wie für die Dokumente 205, oder aber ein davon separater, dedizierter Transportweg für Musterdokumente 225.

Das Modul 310 ist ein Modul, das zur Bilderfassung und zur Verfahrenssteuerung konfiguriert ist. Es kann insbesondere eine Prozessorplattform 310a mit einem oder mehrere Prozessoren, ein zugehöriger Programm- und Datenspeicher 310b sowie eine Bildsensorik (insbesondere Kamera) 310c zur Generierung der Ist-Bildinformationen und der Referenz-Bildinformationen aufweisen. In dem Speicher 310b ist ein Computerprogramm abgelegt, das zur Ausführung auf der Prozessorplattform 310a ausgelegt und konfiguriert ist, das System 300 derart zu steuern, dass es das Verfahren 100 ausführt. Die Prozessorplattform 310a und der Datenspeicher bilden zusammen eine Datenverarbeitungseinrichtung.

Das entlang der der Verarbeitungstrecke nächstfolgende Modul 315 ist als Modul zur Chipkodierung des Chips 215 auf dem Dokument 205 konfiguriert. Dies kann insbesondere kontaktbehaftet oder drahtlos erfolgen, je nach Art des Dokuments 205 und/oder der entsprechenden Kommunikationsfähigkeit des Systems 300.

Es folgt entlang der Verarbeitungsstrecke das weitere Modul 320, das konfiguriert ist, von dem Computerprogram entsprechend angesteuert, eine flächenselektive Flüssigbeschichtung (einschließlich Aufbringen und Aushärten der Beschichtung, insbesondere mittels Bestrahlung durch ultraviolettes Licht (UV)) des Dokuments 250 vorzunehmen. Das Modul 320 stellt entsprechend eine Beschichtungseinrichtung im Sinne des Verfahrens 100 dar und kann insbesondere zum Bedrucken des Dokuments 205 mit der Flüssigbeschichtung eingerichtet sein, beispielsweise als Tintenstrahldrucker.

Als nächstes Modul folgt ein Modul 325 zur Qualitätskontrolle, welches insbesondere wiederum über eine Bildsensorik, etwa eine Foto oder Videokamera, verfügen kann, um die beschichteten Dokumente 260 (vergleiche Fig. 2) im Sinne einer Qualitätskontrolle bildsensorisch zu erfassen und zu überprüfen.

Es folgt schließlich ein Ausgabe-Modul 330 für die beschichteten Dokumente 260, das insbesondere so konfiguriert sein kann, dass es in Abhängigkeit von Ergebnissen der im Modul 325 durchgeführten Qualitätskontrolle fehlerfreie Dokumente einerseits und fehlerbehaftete Dokumente andererseits auf verschiedene Weise ausgibt. Insbesondere können fehlerbehaftete Dokumente aus dem Prozessfluss ausgeschleust werden, bevor die als fehlerfrei erkannten Dokumente ausgegeben werden, was insbesondere ein Aufstapeln der auszugebenden Dokumente beinhalten kann.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 100: Beispielhafte Ausführungsform eines Verfahrens nach dem ersten Aspekt
- 105-140: Verfahrensschritte/Verarbeitungsprozesse im Rahmen des Verfahrens 100
- 200: Abfolge von zu einzelnen Verfahrensschritten/Verarbeitungsprozessen des Verfahrens 100 korrespondierenden Zwischenzuständen eines zu beschichtenden Dokuments
- 205: zu beschichtendes Dokument
- 205A: Ist-Bild des zu beschichtenden Dokuments
- 210: Hintergrundbild (Vordruck) im Ist-Bild
- 215: Abbild eines elektronischer Chips im Ist-Bild
- 220: Bildabschnitt
- 220-1: für eine Mehrzahl von Dokumenten gleiche Kennzeichnung, insbesondere Standard-Text
- 220-2: für eine Mehrzahl von Dokumenten gleiche Kennzeichnung, insbesondere Symbol oder Logo
- 220-3: Individualisierungsinformation, insbesondere dokumentenindividueller Text
- 225: Musterdokument
- 225A: Referenz-Bild einer als Referenz dienenden Oberfläche eines Musterdokuments
- 230: Hintergrundbild (Vordruck) im Referenz-Bild
- 235: Abbild eines elektronischer Chips im Referenz-Bild
- 240-1: für eine Mehrzahl von Dokumenten gleiche Kennzeichnung, insbesondere Standard-Text, im Referenz-Bild
- 240-2: für eine Mehrzahl von Dokumenten gleiche Kennzeichnung, insbesondere Symbol oder Logo, im Referenz-Bild
- 245: Geometrieinformation (anteilig), aus Referenz-Bild gewonnen
- 250: Geometrieinformation (anteilig), aus Ist-Bild gewonnen
- 255: Drucklayout gemäß Beschichtungsinformation
- 255-1: verzerrte Kennzeichnung im Drucklayout, insbesondere Standard-Text
- 255-2: verzerrte Kennzeichnung im Drucklayout, insbesondere Symbol oder Logo
- 255-3: verzerrte Individualisierungsinformation im Drucklayout
- 260: Beschichtetes Dokument
- 260-1: Aufsicht auf erzeugte Beschichtung für Kennzeichnung, insbesondere Standard-Text
- 260-2: Aufsicht auf erzeugte Beschichtung erzeugte Beschichtung für Kennzeichnung, insbesondere Symbol oder Logo
- 260-3: Aufsicht auf erzeugte Beschichtung für Individualisierungsinformation
- 300: Beispielhafte Ausführungsform eines Systems nach dem zweiten Aspekt
- 305: Input-Modul für Dokumente (Karten) und Musterdokument
- 310: Modul für Bilderfassung und Verfahrenssteuerung
- 310a: Prozessorplattform
- 310b: Speicher für Computerprogramm und Informationen/Daten
- 310c: Bildsensorik
- 315: Modul für Chipkodierung
- 320: Modul für Flüssigbeschichtung, Beschichtungseinrichtung
- 325: Modul für Qualitätskontrolle
- 330: Ausgabe-Modul für beschichtete Dokumente (Karten)

## Patentansprüche

1. Verfahren (100) zum Ansteuern einer Beschichtungseinrichtung (320) zum flächenselektiven Beschichten einer Oberfläche eines individuellen physischen Dokuments (205) mit einer Flüssigbeschichtung, wobei das Verfahren (100) aufweist:
Empfangen (110) oder bildsensorisches Erzeugen einer Ist-Bildinformation, die ein Ist-Bild (205A) der Oberfläche repräsentiert;
Abgleichen (120) der Ist-Bildinformation mit einer Referenz-Bildinformation, die ein Referenz-Bild (225A) einer zu der Oberfläche korrespondierenden Referenz-Oberfläche repräsentiert, um anhand von etwaigen Abweichungen zwischen dem Ist-Bild (205A) und dem Referenz-Bild (225A) eine etwaige Deformation der Oberfläche gegenüber der Referenz-Oberfläche zu ermitteln und eine diese Deformation oder alternativ deren Abwesenheit, repräsentierende Deformationsinformation zu erzeugen;
in Abhängigkeit von der Deformationsinformation und von einer Geometrieinformation (245, 250), die eine Soll-Gestalt einer mit der Flüssigbeschichtung zu versehenden Teilfläche (255-1, 255-2, 255-3) der Oberfläche definiert, Ermitteln (125, 130) einer Beschichtungsinformation (255), die eine Ist-Gestalt einer mittels flächenselektiver Flüssigbeschichtung der Oberfläche zu beschichtenden Teilfläche (255-1, 255-2, 255-3) der Oberfläche definiert; und
Ansteuern (135) einer Beschichtungseinrichtung (320), um diese zu veranlassen, die Oberfläche des Dokuments (205) gemäß der Beschichtungsinformation (255) flächenselektiv in der definierten Teilfläche (255-1, 255-2, 255-3) mit der Flüssigkeitsbeschichtung zu versehen;
wobei beim Ermitteln der Beschichtungsinformation (255) die Ist-Gestalt der Teilfläche (255-1, 255-2, 255-3) aus der Geometrieinformation (245, 250) anhand einer in Abhängigkeit von der Deformationsinformation definierten Verzerrung der Soll-Gestalt derart ermittelt wird, dass nach der Ausführung der Flüssigkeitsbeschichtung das Zusammenwirken der Ist-Gestalt der beschichteten Teilfläche (255-1, 255-2, 255-3) mit der Form der Oberfläche im Bereich der Teilfläche (255-1, 255-2, 255-3) die Verzerrung zumindest teilweise kompensiert.

2. Verfahren (100) nach einem der vorausgehenden Ansprüche, wobei die Geometrieinformation (245, 250) zumindest anteilig mittels einer Bildverarbeitung aus der Ist-Bildinformation gewonnen wird.

3. Verfahren (100) nach Anspruch 1, wobei die Geometrieinformation (245, 250) zumindest anteilig mittels einer Bildverarbeitung aus der Referenz-Bildinformation gewonnen wird.

4. Verfahren (100) nach einem der vorausgehenden Ansprüche, des Weiteren aufweisend:
Ermitteln der Geometrieinformation (245, 250) in Abhängigkeit vom Ergebnis einer automatischen Analyse eines die Soll-Gestalt auf seiner Oberfläche verwirklichenden Musterdokuments (225) oder eines Abbilds (225A) davon anhand eines die Teilfläche (255-1, 255-2, 255-3) kennzeichnenden Analysekriteriums, wobei mittels der Analyse eine Gestalt eines zur Teilfläche (255-1, 255-2, 255-3) korrespondierenden Flächenbereichs auf dem Musterdokument (225) bzw. dessen Abbild (225A) ermittelt und als Soll-Gestalt festgelegt wird.

5. Verfahren (100) nach Anspruch 4, wobei das Analysekriterium zumindest anteilig als farbenabhängiges Kriterium definiert ist oder wird und die Analyse ein Ermitteln des Flächenbereichs durch Anwendung des farbenabhängigen Kriteriums bezüglich einer Farbverteilung auf dem Musterdokument (225) bzw. seinem Abbild (225A) erfolgt.

6. Verfahren (100) nach Anspruch 5, wobei die Analyse ein Auswerten der Farbverteilung derart umfasst, dass dabei ein Bereich auf dem Musterdokument (225) bzw. seinem Abbild, dessen Farbe gemäß dem farbenabhängigen Kriterium einer vorgegebenen Referenz-Farbe entspricht oder innerhalb eines vorgegebenen Referenz-Farbbereichs liegt, als ein zur Teilfläche (255-1, 255-2, 255-3) korrespondierender Flächenbereich identifiziert wird.

7. Verfahren (100) nach einem der Ansprüche 4 bis 6, wobei das Analysekriterium zumindest anteilig als oberflächenstrukturabhängiges Kriterium definiert ist und die Analyse ein Ermitteln des Flächenbereichs durch Anwendung des oberflächenstrukturabhängiges Kriteriums bezüglich einer Oberflächenstruktur des Musterdokuments (225) oder seines Abbilds (225A).

8. Verfahren (100) nach Anspruch 7, wobei die Analyse ein Auswerten der Oberflächenstruktur derart umfasst, dass dabei ein Bereich auf dem Musterdokument (225) bzw. seinem Abbild, dessen Oberflächenstruktur gemäß dem oberflächenstrukturabhängiges Kriterium einer vorgegebenen Struktur entspricht oder innerhalb eines vorgegebenen Referenz-Strukturbereichs liegt, als ein zur Teilfläche (255-1, 255-2, 255-3) korrespondierender Flächenbereich identifiziert wird.

9. Verfahren (100) nach einem der Ansprüche 4 bis 8, wobei das Ermitteln der Soll-Gestalt unter Verwendung eines Formerkennungsprozesses erfolgt, um zumindest ein durch den Flächenbereich dargestelltes Formelement aus einem vordefinierten Formenschatz als zumindest anteilige Soll-Gestalt zu erkennen.

10. Verfahren (100) nach Anspruch 9, wobei der Formerkennungsprozess einen Prozess zur optischen Zeichenerkennung, OCR, umfasst, um zumindest ein durch den Flächenbereich dargestelltes Zeichen als zumindest anteilige Soll-Gestalt zu erkennen.

11. Verfahren (100) nach einem der vorausgehenden Ansprüche, wobei das Ermitteln der etwaigen Deformation der Oberfläche gegenüber der Referenz-Oberfläche und/oder das Ermitteln der Beschichtungsinformation (255) unter Verwendung eines dafür trainierten maschinen-lernen-basierten Prozesses erfolgt.

12. Verfahren (100) nach einem der vorausgehenden Ansprüche, wobei das Ermitteln der etwaigen Deformation der Oberfläche gegenüber der Referenz-Oberfläche ein Ermitteln einer Art und/oder Stärke der Deformation der Oberfläche umfasst, und das Ermitteln der Beschichtungsinformation (255) in Abhängigkeit von der so ermittelten Art und/oder Stärke der Deformation erfolgt.

13. Verfahren (100) nach einem der vorausgehenden Ansprüche, wobei:
das Ermitteln der Beschichtungsinformation (255) auf Basis eines Bildabschnitts (220) des Ist-Bilds (205A) erfolgt, der die Teilfläche (255-1, 255-2, 255-3) enthält aber zumindest einen anderen Bereich des Ist-Bilds (205A) nicht enthält; und
der Bildabschnitt (220) in Abhängigkeit einer ermittelten Variabilität der Ist-Gestalt im Rahmen eines Ensembles von mehreren früheren Ausführungen des Verfahrens unter Verwendung von zu dem Dokument (205) gleichartigen Dokumenten bestimmt wird.

14. Verfahren (100) nach einem der vorausgehenden Ansprüche, wobei das Ermitteln der Beschichtungsinformation (255) ein Ausrichten der durch die Beschichtungsinformation (255) repräsentierten Ist-Gestalt der zu beschichteten Teilfläche (255-1, 255-2, 255-3) an einer bei der Aufbringung der Flüssigbeschichtung vorliegenden Orientierung der flächenselektiv zu beschichtenden Oberfläche umfasst.

15. Verfahren (100) nach einem der vorausgehenden Ansprüche, wobei:
das Ermitteln der Beschichtungsinformation (255) ein Erstellen von Druckdaten umfasst, die ein Drucklayout (255) für das flächenselektive Flüssigbeschichten der Oberfläche im Bereich der ermittelten Teilfläche (255-1, 255-2, 255-3) definieren; und
das Ansteuern der Beschichtungseinrichtung (320) in Abhängigkeit von den Druckdaten erfolgt, um die Beschichtungseinrichtung (320) zu veranlassen, die Oberfläche flächenselektiv in dem im Drucklayout (255) der Teilfläche (255-1, 255-2, 255-3) zugeordneten Bereich der Oberfläche mittels Bedrucken mit der Flüssigkeitsbeschichtung zu versehen.

16. Verfahren (100) nach Anspruch 15, wobei das Erstellen der Druckdaten ein Konvertieren einer bereits durch die Ist-Bildinformation definierten Farbgebung oder ein Neufestlegen einer Farbgebung, jeweils für das Drucklayout (255) umfasst.

17. Verfahren (100) nach einem der vorausgehenden Ansprüche, wobei als das mit der Flüssigkeitsbeschichtung zu versehende Dokument (205) ein bereits auf der Oberfläche kontrolliert vorbedrucktes oder vorverformtes Dokument (205) verwendet wird.

18. Verfahren (100) nach einem der vorausgehenden Ansprüche, wobei als das mit der Flüssigkeitsbeschichtung zu versehende Dokument (205) ein kartenartiges Dokument (205) verwendet wird.

19. System zum flächenselektiven Beschichten einer Teilfläche (255-1, 255-2, 255-3) einer Oberfläche eines individuellen physischen Dokuments (205) mit einer Flüssigbeschichtung, wobei das System aufweist:
eine Datenverarbeitungseinrichtung; und
eine durch die Datenverarbeitungseinrichtung (310a, 310b) ansteuerbare Beschichtungseinrichtung (320) zum selektiven Flüssigbeschichten von Oberflächen;
wobei die Datenverarbeitungseinrichtung (310a, 310b) konfiguriert ist, das Verfahren (100) nach einem der vorausgehenden Ansprüche auszuführen und dabei die Beschichtungseinrichtung (320) verfahrensgemäß anzusteuern, um diese zu veranlassen, die Oberfläche des Dokuments (205) gemäß der Beschichtungsinformation (255) flächenselektiv in der definierten Teilfläche (255-1, 255-2, 255-3) mit der Flüssigkeitsbeschichtung zu versehen.

20. Computerprogramm oder Computerprogramprodukt, insbesondere nicht-flüchtiges computerlesbares Speichermedium (310b), jeweils mit Anweisungen, die bei ihrer Ausführung auf einem Computer (310a, 310b) oder auf einer Multi-Computer-Plattform bewirken, dass dieser bzw. diese das Verfahren (100) nach einem der Ansprüche 1 bis 18 ausführt.
